# EUROPEAN PATENT APPLICATION

(11) **EP 2 963 242 A1**
(43) Date of publication of application: **06.01.2016**
(21) Application number: 15175053.6
(22) Date of filing: 02.07.2015
(51) Int. Cl.: F01D 5/14, F01D 5/22

(54) **GAS TURBINE ENGINE WITH SHORT TRANSITION DUCT**

(30) Priority: 03.07.2014 US 201462020506 P
(71) Applicant: United Technologies Corporation, Hartford, CT 06101 (US)
(72) Inventor: SCHWARZ, Frederick M., Glastonbury, CT 06033 (US); ACKERMANN, William K., East Hartford, CT 06118-1905 (US)
(74) Representative: Hull, James Edward

(57) **Abstract**

A turbine section (28) for a gas turbine engine (20; 220; 320; 420) includes a fan drive turbine (46) including a fan drive duct (62), the fan drive turbine (46) being configured to drive a fan section (22) through a geared architecture (48) at a speed that is less than an input speed to the geared architecture (48). At least one upstream turbine (54) is configured to drive at least one compressor (44, 52). The at least one upstream turbine (54) includes a turbine duct (60) defining a conical flow path (70) having a conical inlet (75) defined by a first diameter and a conical outlet (77) defined by a second diameter greater than the first diameter. The conical outlet (77) is in fluid communication with the fan drive duct (62) downstream of the conical outlet (77). At least one row of shrouded rotor blades (71) defines at least a portion of the conical flow path (70).

## Description

### BACKGROUND

This application relates to a turbine section of a gas turbine engine and, more particularly, to a turbine section including a conical flow path.

Typical gas turbine engines include a fan delivering air into a bypass duct as propulsion air and to be utilized to cool components. The fan also delivers air into a core engine where it is compressed in a compressor. Compressed air is then delivered into a combustion section where it is mixed with fuel and ignited. Products of the combustion pass downstream over turbine rotors, driving them to rotate. The gas turbine engine includes one or more bearing compartments for supporting rotation of a spool mechanically coupling the compressor and the turbine rotors to each other.

Some gas turbine engines include at least two turbines each defining a different diameter. A transition duct is typically positioned between the turbines to provide a flow path between the turbines.

### SUMMARY

A turbine section for a gas turbine engine according to an example of the present disclosure includes a fan drive turbine including a fan drive duct. The fan drive turbine is configured to drive a fan section through a geared architecture at a speed that is less than an input speed to the geared architecture. At least one upstream turbine is configured to drive at least one compressor. The at least one upstream turbine includes a turbine duct defining a conical flow path having a conical inlet defined by a first diameter and a conical outlet defined by a second diameter greater than the first diameter. The conical outlet is in fluid communication with the fan drive duct downstream of the conical outlet. At least one row of shrouded rotor blades defines at least a portion of the conical flow path.

In a further embodiment of any of the foregoing embodiments, an outer surface of the turbine duct includes a first sealing feature and each of the shrouded rotor blades includes a second sealing feature. The first sealing feature and the second sealing feature cooperate together to define a labyrinth seal.

In a further embodiment of any of the foregoing embodiments, the second sealing feature includes at least one knife edge extending radially outward from each of the at least one row of shrouded rotor blades. The first sealing feature includes an abradable seal configured to engage the at least one knife edge.

In a further embodiment of any of the foregoing embodiments, the at least one upstream turbine includes at least two rows of shrouded rotor blades defining at least a portion of the conical flow path.

A further embodiment of any of the foregoing embodiments includes a last row of shrouded rotor blades positioned in a last stage of the at least one upstream turbine. Each of the last row of shrouded rotor blades defines a trailing edge. At least one fan drive blade is positioned in a first stage of the fan drive turbine. At least one fan drive blade defines a leading edge and a tip. The fan drive turbine defines a fan drive radius R_{FDT} between a turbine axis of the fan drive turbine and the tip of the fan drive blade. A transition duct fluidly couples the turbine duct and the fan drive duct. The transition duct extends axially a transition duct length L_{TD} defined between the trailing edge of the last row of shrouded rotor blades and the leading edge of the at least one fan drive blade wherein a dimensional relationship of the L_{TD}/R_{FDT} is between about 0.05 and about 0.8.

In a further embodiment of any of the foregoing embodiments, the transition duct includes a mid-turbine frame extending radially through a transition vane positioned in the transition duct. The mid-turbine frame is configured to support the fan drive turbine.

In a further embodiment of any of the foregoing embodiments, the transition vane is a configured to selectively adjust flow of combustion products from the at least one upstream turbine to the fan drive turbine.

A further embodiment of any of the foregoing embodiments includes a last row of shrouded rotor blades positioned in a last stage of the at least one upstream turbine. Each of the last row of shrouded rotor blades defines a trailing edge. At least one fan drive blade is positioned in a first stage of the fan drive turbine. The at least one fan drive blade defines a leading edge and a tip. A transition duct fluidly couples the turbine duct and the fan drive duct. The transition duct extends axially a transition duct length L_{TD} defined between the trailing edge of the last row of shrouded rotor blades and the leading edge of the at least one fan drive blade wherein the fan defines a fan tip radius R_{FT} between a tip of the fan and an fan axis, and wherein a dimensional relationship of the L_{TD}/ R_{FT} is between about 0.05 and about 0.20.

A gas turbine engine according to an example of the present disclosure includes a fan section, a geared architecture configured to drive the fan at a speed that is less than an input speed in the geared architecture, a compressor section, and a turbine section. The turbine section includes a fan drive turbine including a fan drive duct. The fan drive turbine is configured to drive the geared architecture. At least one upstream turbine is configured to drive at least one compressor. The at least one upstream turbine includes a turbine duct defining a conical flow path having a conical inlet defined by a first diameter and a conical outlet defined by a second diameter greater than the first diameter. The conical outlet is in fluid communication with the fan drive duct downstream of the conical outlet. At least one row of shrouded rotor blades defines at least a portion of the conical flow path.

In a further embodiment of any of the foregoing embodiments, an outer surface of the turbine duct includes a first sealing feature and each of the shrouded rotor blades includes a second sealing feature. The first sealing feature and the second sealing feature cooperate together to define a labyrinth seal.

In a further embodiment of any of the foregoing embodiments, the fan drive turbine is configured to drive the compressor section.

A further embodiment of any of the foregoing embodiments includes a last row of shrouded rotor blades positioned in a last stage of the at least one upstream turbine. Each of the last row of shrouded rotor blades defines a trailing edge. At least one fan drive blade is positioned in a first stage of the fan drive turbine. The at least one fan drive blade defines a leading edge and a tip. The fan drive turbine defines a fan drive radius R_{FDT} between a turbine axis of the fan drive turbine and the tip of the fan drive blade. A transition duct fluidly couples the turbine duct and the fan drive duct. The transition duct extends axially a transition duct length L_{TD} defined between the trailing edge of the last row of shrouded rotor blades and the leading edge of the at least one fan drive blade, wherein a dimensional relationship of the L_{TD}/R_{FDT} is between about 0.05 and about 0.8.

In a further embodiment of any of the foregoing embodiments, the geared architecture defines a gear reduction ratio greater than or equal to about 2.3.

A further embodiment of any of the foregoing embodiments includes a last row of shrouded rotor blades positioned in a last stage of the at least one upstream turbine, each of the last row of shrouded rotor blades defining a trailing edge. At least one fan drive blade is positioned in a first stage of the fan drive turbine. The at least one fan drive blade defines a leading edge and a tip. A transition duct fluidly couples the turbine duct and the fan drive duct. The transition duct extends axially a transition duct length L_{TD} defined between the trailing edge of the last row of shrouded rotor blades and the leading edge of the at least one fan drive blade. The fan defines a fan tip radius R_{FT} between a tip of the fan and a fan axis, and wherein a dimensional relationship of the L_{TD}/ R_{FT} is between about 0.05 and about 0.20.

In a further embodiment of any of the foregoing embodiments, the gear reduction ratio is between about 2.6 and about 4.0.

In a further embodiment of any of the foregoing embodiments, the fan is configured to deliver a portion of air into the compressor section, and a portion of air into a bypass duct, wherein a bypass ratio, which is defined as a volume of air passing to the bypass duct compared to a volume of air passing into the compressor section, is greater than or equal to about 12.

In a further embodiment of any of the foregoing embodiments, a pressure ratio across the fan is less than or equal to about 1.50.

A method of designing a gas turbine engine according to an example of the present disclosure includes providing a compressor section, configuring a fan section to include a fan having a plurality of fan blades, configuring a geared architecture to drive the fan at a speed that is less than an input speed in the geared architecture, the geared architecture defining a gear reduction ratio, and configuring a turbine section to include at least one upstream turbine and a fan drive turbine, the fan drive turbine including a fan drive duct. The fan drive turbine is configured to drive the geared architecture. At least one upstream turbine is configured to drive the compressor section. At least one upstream turbine includes a turbine duct defining a conical flow path having a conical inlet defined by a first diameter and a conical outlet defined by a second diameter greater than the first diameter. The conical outlet is in fluid communication with the fan drive duct downstream of the conical outlet. At least one upstream turbine includes at least one row of shrouded rotor blades defining at least a portion of the conical flow path.

A further embodiment of any of the foregoing embodiments includes providing a fan drive blade in a first stage of the fan drive turbine. The fan drive blade includes a tip. The fan drive turbine defines a fan drive radius R_{FDT} between a fan drive axis of the fan drive turbine and the tip of the fan drive blade, configuring the at least one row of shrouded rotor blades to be located in a last stage of the at least one upstream turbine. Each of the shrouded rotor blades includes a base. The at least one upstream turbine defines a turbine radius R_{T} between a turbine axis of the at least one upstream turbine and the base of one of the shrouded rotor blades. The method also includes the step of selecting each of the fan drive radius R_{FDT} and the turbine radius R_{T} based on the gear reduction ratio.

In a further embodiment of any of the foregoing embodiments, the gear reduction ratio is between about 2.6 and about 4.0.

Although the different examples have the specific components shown in the illustrations, embodiments of this disclosure are not limited to those particular combinations. It is possible to use some of the components or features from one of the examples in combination with features or components from another one of the examples.

The various features and advantages of this disclosure will become apparent to those skilled in the art from the following detailed description. The drawings that accompany the detailed description can be briefly described as follows.

### BRIEF DESCRIPTION OF THE DRAWINGS

The disclosure can be further understood by reference to the following detailed description when considered in connection with the accompanying drawings wherein:
Figure 1 schematically illustrates a geared turbofan engine embodiment.
Figure 2 schematically shows the arrangement of the low and high spool, along with the fan drive of Figure 1.
Figure 3 schematically shows an alternative drive arrangement of Figure 1.
Figure 4 schematically shows a gas turbine engine including a three-spool architecture.
Figure 5 schematically illustrates a turbine section for a gas turbine engine.
Figure 6 illustrates a shrouded turbine blade arrangement for the turbine section of Figure 5.
Figure 7 illustrates a second embodiment of a shrouded turbine blade arrangement for the turbine section of Figure 5.
Figure 8 illustrates a third embodiment of a shrouded turbine blade arrangement for the turbine section of Figure 5.
Figure 9 illustrates a method of designing a gas turbine engine, such as those shown in Figures 1-5.

### DETAILED DESCRIPTION

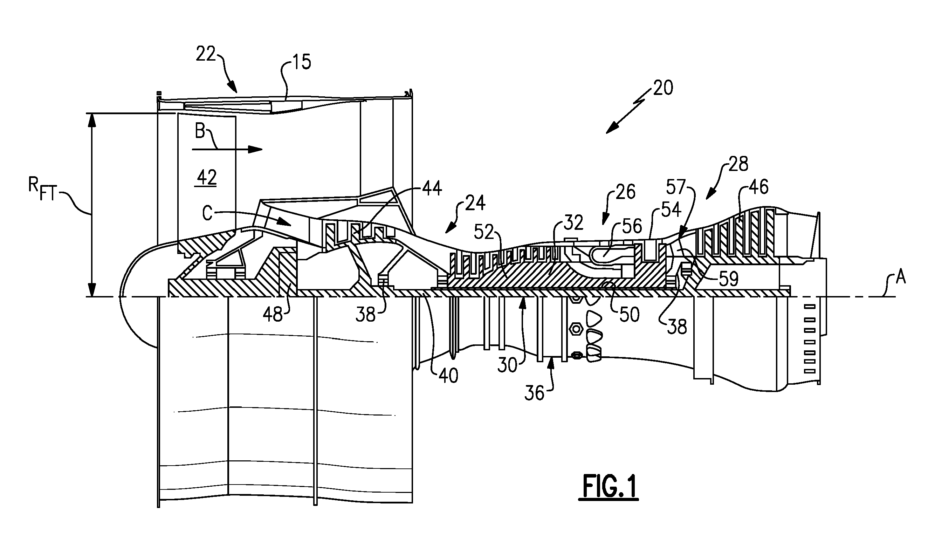

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3 and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). In further examples, the bypass ratio is greater than about twelve (12:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach (272 m/s) and about 35,000 feet (10.7 km). The flight condition of 0.8 Mach (272 m/s) and 35,000 ft (10.7 km), with the engine at its best fuel consumption - also known as "bucket cruise Thrust Specific Fuel Consumption ('TSFC')" - is the industry standard parameter of Ibm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In further examples, the low fan pressure ratio is less than about 1.45. "Low corrected fan tip speed" is the actual fan tip speed in ft/sec divided by an industry standard temperature correction of [(Tram °R) / (518.7 °R)]0.5. The "Low corrected fan tip speed" as disclosed herein according to one non-limiting embodiment is less than about 1150 ft / second (350 m/s).

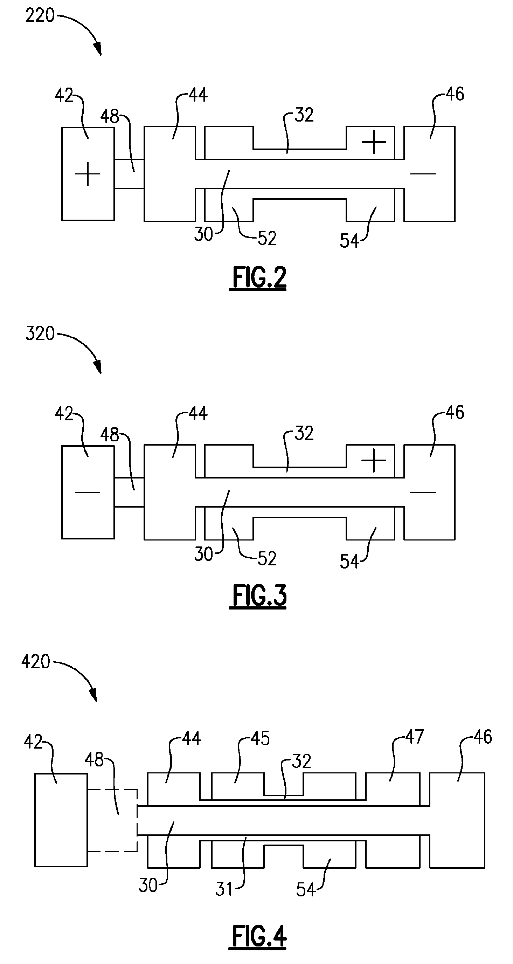

Figures 2 and 3 schematically illustrate engines 220 and 320, each which may generally have the features of engine 20 in Figure 1. In this disclosure, like reference numerals designate like elements where appropriate and reference numerals with the addition of one-hundred or multiples thereof designate modified elements that are understood to incorporate the same features and benefits of the corresponding original elements.

As shown in Figure 2, the engine 220 may be counter-rotating. This means that the low speed spool 30, including the first or fan drive turbine 46 and first compressor 44, rotates in one direction ("-"), while the high speed spool 32, including second turbine 54 and second compressor 52, rotates in an opposed direction ("+"). The gear reduction 48, which may be, for example, an epicyclic transmission (e.g., with a sun, ring, and star gears), is selected such that the fan 42 rotates in the same direction ("+") as the high spool 32. In Figure 3, the fan 42 of engine 320 rotates in the same direction as the low speed spool 30. To achieve this rotation, the gear reduction 48 may be a planetary gear reduction which would cause the fan 42 to rotate in the same direction. Of course, this application extends to engines where the two spools rotate in the same direction.

Figure 4 schematically illustrates an engine 420 arranged as a three-spool architecture. The engine includes similar features as the engine 20 and also has an intermediate spool 31. The intermediate spool 31 generally includes the low pressure compressor 44 and an intermediate pressure turbine 47 interconnected by a shaft extending along the engine central longitudinal axis A. The low speed spool 30 includes the low pressure or fan drive turbine 46 interconnected with the fan 42. In some embodiments, the engine 420 includes a gear reduction 48 positioned between the low pressure turbine 46 and the fan 42. The gear reduction 48 can be located adjacent to the fan 42 (shown) or adjacent to the low pressure turbine 46 as is known in the art. The fan 42 can be configured to rotate in the same direction or in the opposite direction as the low pressure turbine 46 via the gear reduction 48. In other embodiments, the gear reduction 48 is omitted. With the arrangement of any of the engines 20, 220, 320, 420, and with the other structure as set forth below, including the various quantities and operational ranges, the overall efficiency of the gas turbine engine is increased.

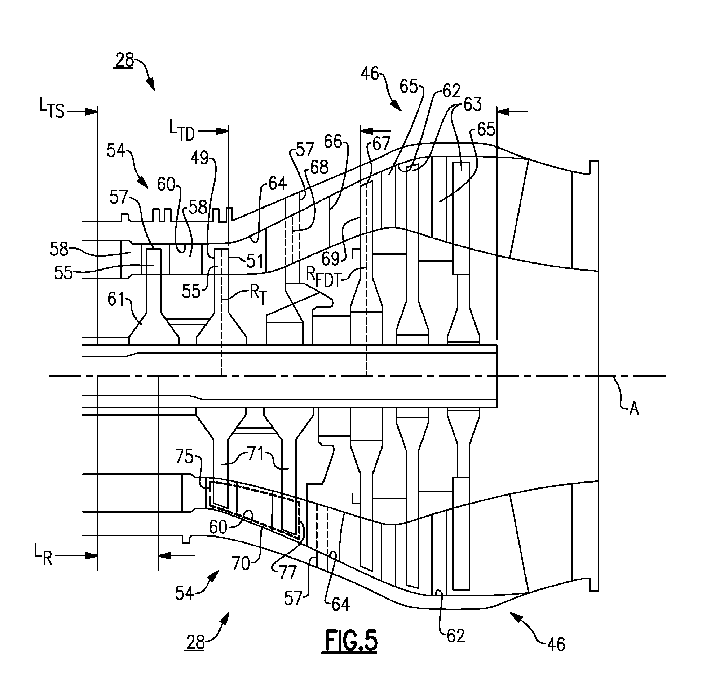

Figure 5 schematically illustrates a turbine section 28 for a gas turbine engine, such as any of the engines 20, 220, 320, 420. The top portion of Figure 5 relative to axis A illustrates a turbine section 28 including at least one upstream turbine 54 and a fan drive turbine 46 downstream of the at least one upstream turbine 54. When used generically, "upstream turbine" as disclosed herein means any turbine upstream of the fan drive turbine 46 with respect to the core flow path C.

As shown, the upstream turbine 54 includes a turbine duct 60 having a flow path generally parallel to the turbine or engine axis A and is in fluid communication with a fan drive duct 62 downstream of the turbine duct 60. The upstream turbine 54 includes at least one row of unshrouded turbine blades 55 and at least one row of turbine vanes 58. Each of the unshrouded turbine blades 55 defines a tip 57 spaced radially outward from the axis A, and also a leading edge 49 and a trailing edge 51 spaced in a chordwise direction.

The fan drive turbine 46 includes at least one row of fan drive blades 63 and at least one row of fan drive vanes 65 positioned in the fan drive duct 62. Each of the fan drive blades 63 defines a tip 67 spaced radially outward from the axis A and a leading edge 69. In some examples, at least one row of the fan drive blades 63 includes shrouded fan drive blades.

The turbine duct 60 and fan drive duct 62 each define a different diameter relative to the engine axis A. Rather, the upstream turbine 54 defines a turbine radius R_{T} between the tip 57 of the unshrouded turbine blade 55 and a turbine axis, such as the engine axis A. The fan drive turbine 46 defines a fan drive radius R_{FDT} between a fan drive axis, such as the engine axis A, and the tip 67 of a fan drive blade 63 positioned in a first stage of the fan drive turbine 46. In some examples, the fan drive radius R_{FDT} is greater than the turbine radius R_{T}.

A transition duct 64 is positioned between and is fluidly coupled to the turbine duct 60 to the fan drive duct 62. The transition duct 64 accounts for the different relative diameters of the upstream turbine 54 and the fan drive turbine 46.

A transition vane 66 is positioned in the transition duct 64. The transition vane 66 may be pivotable about a radial axis 68 to selectively adjust the flow of combustion products from the upstream turbine 54 to the fan drive duct 62.

The transition duct 64 extends a transition duct length L_{TD} defined between the trailing edge 51 of the unshrouded turbine blade 55 positioned in a last stage of the upstream turbine 54 and the leading edge 69 of the fan drive blade 63 positioned in a first row of the fan drive turbine 46. The transition duct length L_{TD} defines in part an overall length L_{TS} of the turbine section 28. Accordingly, a reduction in the transition duct length L_{TD} results in a reduction L_{R} to the overall length L_{TS}.

The bottom portion of Figure 5 relative to axis A illustrates a turbine section 28 including at least one upstream turbine 54 having a turbine duct 60 defining a conical flow path 70. The conical flow path 70 includes a conical inlet 75 and a conical outlet 77. The conical flow path 70 is arranged such that a first diameter defined by a conical inlet 75 is less than a second diameter defined by the conical outlet 77. Rather, the conical flow path 70 increases in diameter as the combustion products are communicated downstream to the fan drive turbine 46. In some examples, an outer diameter of the turbine duct 60 is transverse to axis A to define the conical flow path 70. As shown in Figure 5, an outer diameter of the turbine duct 60 and the inner diameter of the turbine duct 60 are both transverse to axis A to define the conical flow path 70. It should be understood that the conical flow path 70 can extend into the transition duct 74 and the fan drive turbine duct 62. In some examples, the intermediate pressure turbine 47 (shown in Figure 4) is configured to include a conical flow path 70 utilizing the techniques described herein. In further examples, the upstream turbine 54 and the intermediate pressure turbine 47 both define a conical flow path 70.

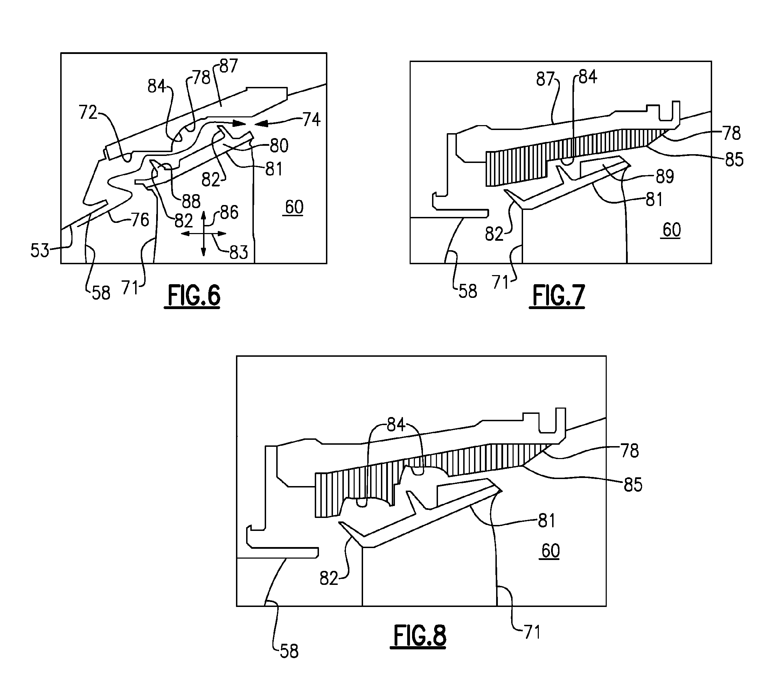

Referring to Figures 6-8 with continuing reference to Figure 5, the conical flow path 70 is defined by at least one row of shrouded rotor blades 71, such as a last row of the upstream turbine 54 adjacent the fan drive turbine 46. Each of the shrouded rotor blades 71 includes a conventional base 81 attached at the outer periphery of each of the shrouded rotor blades 71. The shrouded rotor blades 71 are arranged to define an array extending circumferentially about the axis A and spaced radially inward from an outer surface 72 of the turbine duct 60 to define an outer diameter of the conical flow path 70. Rather, the base 81 of each shrouded rotor blades 71 defines a portion of the conical flow path 70, such that the conical flow path 70 is defined by at least the shrouded rotor blade 71 in the last stage of the upstream turbine 54, the transition duct 74 and the fan drive blade 63 positioned in a first row of the fan drive turbine 46. In some examples, the upstream turbine 54 includes two or more rows of shrouded rotor blades 71 defining at least a portion of the conical flow path 70. Each row or stage of the upstream turbine 54 can include shrouded rotor blades 71 to define the conical flow path 70.

The shrouded rotor blades 71 can have a larger mass at the large diameter relative to the unshrouded rotor blades 55, and therefore generally rotate at a lower speed because of the high blade pull and the structural stress locally in the shroud itself as it transitions into the airfoil. The unshrouded rotor blades 55 therefore can reduce an axial length of the upstream turbine 54 slightly. Increasing the speed of the unshrouded rotor blades 55, however, generally results in an increase in mass of each of the disks 61 supporting the unshrouded rotor blades 55, particularly in the bore region of the disk. In turn, an increase in disk mass in the bore subjects the disk to additional mechanical stresses at the high speeds and additional thermal stresses at high power due the pronounced difference in thermal response in the outer regions of the disk and the bore region of the same disk. The mass of the disks 55 also adds substantially to a transient thermal mismatch and resulting rate of thermal expansion between the disk and its unshrouded rotor blades 55 and the thermal casing or outer diameter of the turbine duct 60 during engine acceleration and deceleration. In some examples, the upstream turbine 54 includes at least one row of shrouded rotor blades 71 and at least one row of unshrouded rotor blades 55 upstream of the at least one row of shrouded rotor blades 71 based upon design parameters and operational requirements. In further examples, the at least two rows of shrouded rotor blades 71 can be configured to rotate together as part of one spool, such as in the engines 20, 220 and 320. In other examples, the at least two rows of shrouded rotor blades 71 can be two distinct turbines rotating at different speeds, such as in the engine 420.

As shown in Figure 6, one or more rows of turbine vanes 58 can also be configured to have a platform 53 transverse to axis A to define a portion of the conical flow path 70. The platform 53 permits the conical flow path 70 to be defined relatively further upstream to minimize the transition duct length L_{TD}. Generally, shrouded rotor blades provide lower relative leakage than unshrouded rotor blade configurations by minimizing open tip clearances which can represent a large percentage of the total flowpath annulus and therefore an inordinately large efficiency loss due to leakage air bypassing the turbine airfoil by going around the tip.

In some examples, an outer surface 72 of the turbine duct 60 includes a first sealing feature 78, and each of the shrouded rotor blades 71 includes a second sealing feature 80. The first sealing feature 78 and the second sealing feature 80 cooperating together to define a labyrinth seal 74. The second sealing feature 80 can be defined by the base 81 of each of the shrouded rotor blades 71. The labyrinth seal 74 is configured to account for different relative thermal characteristics of the shrouded rotor blades 71, disk, and turbine casing. Accordingly, the labyrinth seal 74 minimizes a leakage flow 76 of the combustion products from the conical flow path 70, thereby improving the overall efficiency of the turbine section 28. It should be appreciated that the fan drive turbine 46 can also include one or more rows of shrouded rotor blades 71 and can also include any of the features of the labyrinth seal 74. The first sealing feature 78 can be formed from an abradable, ceramic or nickel-based alloy material, for example, such that the engine "cuts" or machines for itself the smallest possible leakage path for all flight conditions, and including all effects such as the transient mismatch described earlier and all other effects such the loads and resulting deflections imparted by the large fan on the engine, and smaller deflections such as gyroscopic loads, all in the combinations that these loads and deflections arise. In other examples, the material of the first sealing feature 78 is selected to account for the thermal characteristics of upstream turbine 54.

As shown in Figure 6, the first sealing feature 78 can define one or more contours or grooves 84. In some examples, the grooves 84 are defined by a surface of a blade outer air seal (BOAS) 87 defining a portion of the turbine duct 60. The second sealing feature 80 can include one or more knife edges 82 extending from each base 81. Each of the knife edges 82 can include various geometries extending in axial and/or radial directions 83, 86. For example, one or more of the knife edges 82 can have a canted geometry 88 relative to the core flow path, and another one of the knife edges 82 can have a blunted geometry 89 (shown in Figure 8). In other examples, the knife edges 82 can extend radially outward without an axial component. The leakage flow 76 through the knife edges 82 is a static pressure driven by a mix of gas path and cooling air flow. Rather, the knife edges 82 minimize a dynamic pressure component of the total pressure of the leakage flow 76 through the clearance gap.

In some examples, the grooves 84 are spaced both in an axial direction 83 and a radial direction 86 from the knife edges 82 extending radially outward from the base 81 (shown in Figure 8). A geometry of each of the grooves 84 can be defined according to transient thermal conditions which may cause the relative movement of the shrouded rotor blades 71 in the axial and/or radial directions 83, 86 relative to the outer surface 72 or casing of the upstream turbine 54. Unshrouded rotor blades, on the other hand, typically do not include an axial sealing component or abradable capability, and therefore are configured with open build clearances to compensate for worst-case out-of-roundness, tolerances and hot accelerations.

The grooves 84 can be configured to accommodate case out-of-roundness and rotor-to-case concentricity tolerance which may occur as the engine transitions between cruise and take-off or landing and engine power demand varies. A component of the grooves 84 can also be defined axially aft of the knife edges 82 to minimize contact which may otherwise occur due to hot acceleration rubs and bowed rotor starting.

As shown in Figures 7 and 8, the first sealing feature 78 can include an abradable seal 85. In some examples, the abradable seal 85 is brazed onto a surface of the blade outer air seal (BOAS) 87 defining a portion of the turbine duct 60. The abradable seal 85 is configured to engage each knife edge 82. Rather, each knife edge 82 is configured to "cut" a path through the abradable seal 85 for all high power conditions and all steady state conditions of the engine 20, 220, 320, 420, such as transient thermal conditions when a clearance between the abradable seal 85 and each knife edge 82 is minimized. In some examples, the abradable seal 85 defines one or more of the grooves 84 to minimize the effect of case out-of-roundness, main bearing concentricity and backbone bending, thereby improving the overall efficiency of the turbine section 28.

The relative diameters of the upstream turbine 54 and fan drive turbine 46 can be minimized by increasing the diameter of the upstream turbine 54. However, an increase in the diameter of the upstream turbine 54 defined by the shrouded rotor blades 71 also increases the mechanical stresses on the shrouded rotor blades 71 due to centrifugal forces created by the additional mass of the base located at the periphery of each shrouded blade.

Alternatively, the relative diameters of the upstream turbine 54 and fan drive turbine 46 can be minimized by decreasing the diameter of the fan drive turbine 46. Holding engine thrust constant and fan bypass ratio constant as the diameter of the fan drive turbine 46 is reduced, the gear reduction ratio of the geared architecture 48 is increased. This gear reduction ratio increase has side effects in that the increase in the speed of the fan drive turbine 46, however, exerts additional mechanical stresses on the shrouded blades located in the fan drive turbine 46 due to centrifugal forces created by the additional mass of the base located at the periphery of each shrouded fan drive blade 63.

Referring back to Figure 5, the transition duct length L_{TD} can be minimized by applying a unique combination of the geared architecture 48, the fan drive turbine 46 and the upstream turbine 54. In some examples, the turbine section 28 defining the conical flow path 70 is configured such that a dimensional relationship of the transition duct length L_{TD} to the fan drive radius R_{FDT} is less than or equal to about 1.0. In other examples, a dimensional relationship of the transition duct length L_{TD} to the fan drive radius R_{FDT} is between about 0.05 and about 0.8.

The transition duct length L_{TD} can be minimized by applying a unique combination of the geared architecture 48, the fan drive turbine 46 and the upstream turbine 54. In some examples, the turbine section 28 defining the conical flow path 70 is configured such that a dimensional relationship of the transition duct length L_{TD} to the fan drive radius R_{FDT} is less than or equal to about 1.0. In other examples, a dimensional relationship of the transition duct length L_{TD} to the fan drive radius R_{FDT} is between about 0.05 and about 0.8.

The transition duct length L_{TD} can also be minimized by applying a unique combination of the fan 42, the geared architecture 48, the fan drive turbine 46 and the upstream turbine 54. In some examples, a fan tip radius R_{FT} (shown in Figure 1) is defined between a tip of the fan 42 and the engine axis A. In some examples, a dimensional relationship of the transition duct length L_{TD} to the fan tip radius R_{FT} is less than or equal to about 0.50. In other examples, a dimensional relationship of the transition duct length L_{TD} to the fan tip radius R_{FT} is between about 0.05 and about 0.20.

The gear reduction ratio can be set to further minimize the transition duct length L_{TD}. The diameter of the fan drive turbine 46 can be reduced by setting a gear reduction ratio such that the geared architecture 48 drives the fan 42 at a lower relative speed than the fan drive turbine 46. In some examples, the gear reduction ratio is equal to or greater than about 2.3 and more preferably being equal to or greater than about 2.6. In further examples, the gear reduction ratio between about 2.6 and about 4.0.

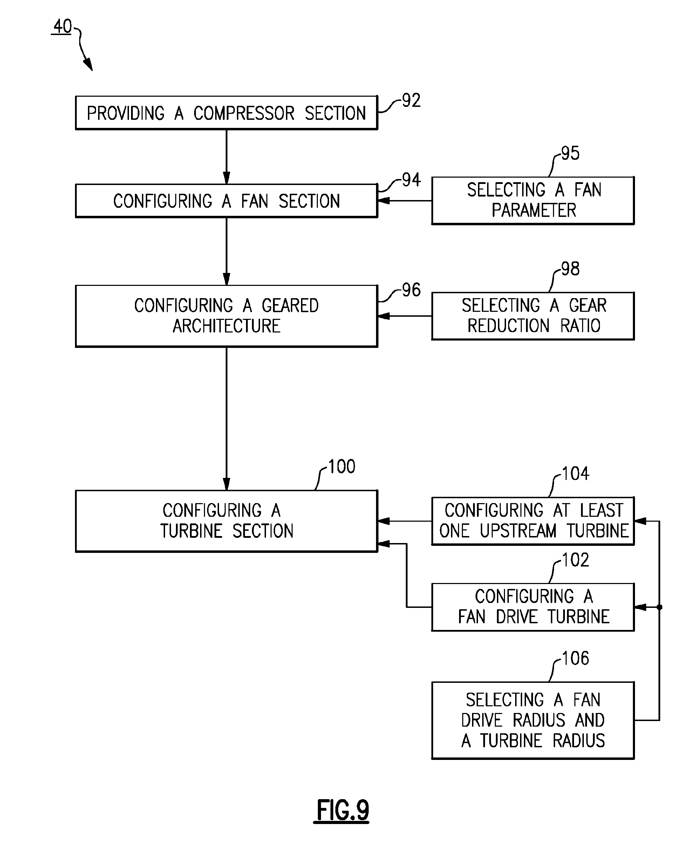

Figure 9 illustrates a method 90 of designing a gas turbine engine, such as any of the engines 20, 220, 320 and 420. At step 92 a compressor section is provided. At step 94, a fan section is configured to include a fan. Optionally, step 94 can include selecting a fan parameter can be performed at step 95, such as selecting a bypass ratio, fan pressure ratio, or fan tip speed having any of the quantities disclosed herein. At step 96 a geared architecture is configured to drive the fan at a speed that is less than an input speed in the geared architecture. Optionally, at step 98 a gear reduction ratio defined by the geared architecture is selected.

At step 100, a turbine section is configured to include at least one turbine and a fan drive turbine. The step of configuring the turbine section includes configuring the fan drive turbine at step 102, which the fan drive turbine defining a fan drive radius R_{FDT} between a fan drive axis of the fan drive turbine and a tip of a fan drive blade located in the fan drive turbine. The step of configuring the turbine section also includes configuring the at least one turbine at step 104 to define a conical flow path as disclosed herein. The at least one turbine includes at least one row of shrouded rotor blades defining at least a portion of the conical flow path. In some examples, the method 90 includes selecting each of the fan drive radius R_{FDT} and the turbine radius R_{T} based on the gear reduction ratio at step 106.

The conical flow path 70 of the upstream turbine 54 provides many benefits. The conical flow path 70 enabled by shrouded turbine blades provides for a relatively short transition duct 64 to the fan drive turbine 46, and in some configurations, can eliminate the need for providing a transition duct 64 altogether. Minimizing the transition duct length L_{TD} can also minimize cooling air requirements to the turbine section 28 because the transition duct represents a large structure (with segments and other pieces to reduce thermal stresses) that inherently leak and by making the duct shorter one is inherently reducing these highly undesirable leaks. The conical flow path 70 can allow the transition vane 66 to also function as a mid-turbine frame 57. A combination of the fan 42, the geared architecture 48, the fan drive turbine 46 and the upstream turbine 54 configured with the quantities disclosed herein enables lower speeds and relatively lighter weight rotor disk of the upstream turbine 54 and the fan drive turbine 46. The combination also minimizes case-to-disk transient thermal mismatch, further minimizing the clearance gaps defined in the upstream turbine 54 and the fan drive turbine 46.

Although the different examples have a specific component shown in the illustrations, embodiments of this disclosure are not limited to those particular combinations. It is possible to use some of the components or features from one of the examples in combination with features or components from another one of the examples. Also, although particular step sequences are shown, described, and claimed, it should be understood that steps may be performed in any order, separated or combined unless otherwise indicated and will still benefit from the present disclosure.

Furthermore, the foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A turbine section (28) for a gas turbine engine (20; 220; 320; 420) comprising:
a fan drive turbine (46) including a fan drive duct (62), the fan drive turbine (46) being configured to drive a fan section (22) through a geared architecture (48) at a speed that is less than an input speed to the geared architecture (48);
at least one upstream turbine (54) configured to drive at least one compressor (44, 52), the at least one upstream turbine (54) including a turbine duct (60) defining a conical flow path (70) having a conical inlet (75) defined by a first diameter and a conical outlet (77) defined by a second diameter greater than the first diameter, the conical outlet (77) being in fluid communication with the fan drive duct (62) downstream of the conical outlet (77); and
at least one row of shrouded rotor blades (71) defining at least a portion of the conical flow path (70).

2. A gas turbine engine (20; 220; 320; 420) comprising:
a fan section (22) including a fan (42);
a geared architecture (48) configured to drive the fan (42) at a speed that is less than an input speed to the geared architecture (48);
a compressor section (24); and
a turbine section (28) as claimed in claim 1.

3. The gas turbine engine as recited in claim 2, wherein the fan drive turbine (46) is configured to drive the compressor section (24).

4. The gas turbine engine as recited in claim 2 or 3, wherein the fan (42) is configured to deliver a portion of air into the compressor section (24), and a portion of air into a bypass duct, and wherein a bypass ratio, which is defined as a volume of air passing to the bypass duct (B) compared to a volume of air passing into the compressor section (C), is greater than or equal to about 12.

5. The gas turbine engine as recited in claim 2, 3 or 4, wherein a pressure ratio across the fan (42) is less than or equal to about 1.50.

6. The turbine section (28) or turbine engine (20; 220; 320; 420) as recited in any preceding claim, wherein an outer surface (72) of the turbine duct (60) includes a first sealing feature (78) and each of the shrouded rotor blades (71) includes a second sealing feature (80), the first sealing feature (78) and the second sealing feature (80) cooperating together to define a labyrinth seal (74).

7. The turbine section (28) or gas turbine engine (20; 220; 320; 420) as recited in claim 6, wherein the second sealing feature (80) includes at least one knife edge (82) extending radially outward from each of the at least one row of shrouded rotor blades (71), and the first sealing feature (78) includes an abradable seal (85) configured to engage the at least one knife edge (82).

8. The turbine section (28) or gas turbine engine (20; 220; 320; 420) as recited in any preceding claim, wherein the at least one upstream turbine (54) includes at least two rows of shrouded rotor blades (71) defining at least a portion of the conical flow path (70).

9. The turbine section (28) or gas turbine engine (20; 220; 320; 420) as recited in any preceding claim, comprising:
a last row of shrouded rotor blades (71) positioned in a last stage of the at least one upstream turbine (54), each of the last row of shrouded rotor blades (71) defining a trailing edge;
at least one fan drive blade (63) positioned in a first stage of the fan drive turbine (46), the at least one fan drive blade (63) defining a leading edge (69) and a tip (67), the fan drive turbine (46) defining a fan drive radius R_{FDT} between a turbine axis (A) of the fan drive turbine (46) and the tip (67) of the fan drive blade (63); and
a transition duct (64) fluidly coupling the turbine duct (60) and the fan drive duct (62), the transition duct (64) extending axially a transition duct length L_{TD} defined between the trailing edge of the last row of shrouded rotor blades (71) and the leading edge (69) of the at least one fan drive blade (63), wherein a dimensional relationship of the L_{TD}/R_{FDT} is between about 0.05 and about 0.8.

10. The turbine section (28) or gas turbine (20; 220; 320; 420) as recited in claim 9, wherein the transition duct (64) includes a mid-turbine frame (57) extending radially through a transition vane (66) positioned in the transition duct (64), the mid-turbine frame (57) being configured to support the fan drive turbine (46); wherein optionally, the transition vane (66) is a configured to selectively adjust flow of combustion products from the at least one upstream turbine (54) to the fan drive turbine (46).

11. The turbine section (28) or gas turbine engine (20; 220; 320; 420) as recited in any preceding claim, wherein the geared architecture (48) defines a gear reduction ratio greater than or equal to about 2.3.

12. The turbine section (28) or gas turbine engine (20; 220; 320; 420) as recited in any preceding claim, comprising:
a/the last row of shrouded rotor blades (71) positioned in a last stage of the at least one upstream turbine (54), each of the last row of shrouded rotor blades (71) defining a trailing edge;
a/the at least one fan drive blade (63) positioned in a first stage of the fan drive turbine (46), the at least one fan drive blade (63) defining a leading edge (69) and a tip (67); and
a/the transition duct (64) fluidly coupling the turbine duct (60) and the fan drive duct (62), the transition duct (64) extending axially a transition duct length L_{TD} defined between the trailing edge of the last row of shrouded rotor blades (71) and the leading edge (69) of the at least one fan drive blade (63), wherein a/the fan (42) defines a fan tip radius R_{FT} between a tip of the fan (42) and a fan axis, and wherein a dimensional relationship of the L_{TD}/ R_{FT} is between about 0.05 and about 0.20.

13. A method of designing a gas turbine engine (20; 220; 320; 420) comprising:
providing a compressor section (24);
configuring a fan section (22) to include a fan (42) having a plurality of fan blades;
configuring a geared architecture (48) to drive the fan (42) at a speed that is less than an input speed in the geared architecture (48), the geared architecture (48) defining a gear reduction ratio; and
configuring a turbine section (28) to include at least one upstream turbine (54) and a fan drive turbine (46), the fan drive turbine (46) including a fan drive duct (67), the fan drive turbine (46) being configured to drive the geared architecture (48), the at least one upstream turbine (54) being configured to drive the compressor section (24), the at least one upstream turbine (54) including a turbine duct (60) defining a conical flow path (70) having a conical inlet (75) defined by a first diameter and a conical outlet (77) defined by a second diameter greater than the first diameter, the conical outlet (77) being in fluid communication with the fan drive duct (62) downstream of the conical outlet (77), the at least one upstream turbine (54) including at least one row of shrouded rotor blades (71) defining at least a portion of the conical flow path (70).

14. The method of claim 13, comprising:
providing a fan drive blade (63) in a first stage of the fan drive turbine (46), the fan drive blade (63) including a tip (67), the fan drive turbine (46) defining a fan drive radius R_{FDT} between a fan drive axis of the fan drive turbine (46) and the tip (67) of the fan drive blade (63); and
configuring the at least one row of shrouded rotor blades (71) to be located in a last stage of the at least one upstream turbine (54), each of the shrouded rotor blades (71) including a base, the at least one upstream turbine defining a turbine (54) radius R_{T} between a turbine axis of the at least one upstream turbine (54) and the base of one of the shrouded rotor blades (71); and
selecting each of the fan drive radius R_{FDT} and the turbine radius R_{T} based on the gear reduction ratio.

15. The turbine section (28), gas turbine (20; 220; 320; 420) or method of claim 12, 13 or 14, wherein the gear reduction ratio is between 2.6 and 4.0.
